# EUROPEAN PATENT SPECIFICATION

(11) **EP 3 217 533 B1**
(45) Date of publication and mention of the grant of the patent: **12.07.2023**
(21) Application number: 17158797.5
(22) Date of filing: 02.03.2017
(51) Int. Cl.: H02P 8/32, H02P 8/18, H02P 6/08, F16H 59/08

(54) **ELECTROMECHANICAL DEVICE, CONTROL METHOD OF ELECTROMECHANICAL DEVICE, AND CONTROL PROGRAM OF ELECTROMECHANICAL DEVICE**
ELEKTROMECHANISCHE VORRICHTUNG, STEUERUNGSVERFAHREN FÜR EINE ELEKTROMECHANISCHE VORRICHTUNG UND STEUERUNGSPROGRAMM FÜR EINE ELEKTROMECHANISCHE VORRICHTUNG
DISPOSITIF ÉLECTROMÉCANIQUE, PROCÉDÉ DE COMMANDE DE DISPOSITIF ÉLECTROMÉCANIQUE ET PROGRAMME DE COMMANDE DE DISPOSITIF ÉLECTROMÉCANIQUE

(30) Priority: 07.03.2016 JP 2016043516
(43) Date of publication of application: 13.09.2017
(73) Proprietor: Alps Alpine Co., Ltd., Tokyo 145-8501 (JP)
(72) Inventor: Miyako, Ikuyasu, Ota-ku, Tokyo 145-8501 (JP); Kimura, Wataru, Ota-ku, Tokyo 145-8501 (JP)
(74) Representative: Schmitt-Nilson Schraud Waibel Wohlfrom Patentanwälte Partnerschaft mbB

(56) References cited:
- DE-A1- 3 302 209
- JP-A- H07 123 792
- US-A- 5 117 171
- US-A1- 2015 303 840
- US-A1- 2016 017 983
- DONG-HEE LEE ET AL: "Micro-step position control with a simple voltage controller using low-cost micro-processor", INDUSTRIAL ELECTRONICS (ISIE), 2010 IEEE INTERNATIONAL SYMPOSIUM ON, IEEE, PISCATAWAY, NJ, USA, 4 July 2010 (2010-07-04), pages 1378-1382, XP031802874, DOI: 10.1109/ISIE.2010.5637223 ISBN: 978-1-4244-6390-9

## Description

The present invention relates to an electromechanical device, a control method of an electromechanical device, and a control program of an electromechanical device.

In an electromechanical device including a motor mounted therein, various members are moved by the rotation of the rotary shaft of the motor. As a kind of electromechanical device, for example, a dial type shifting device for switching the transmission of a vehicle can be mentioned. The dial type shifting device sends a switching command to the transmission electronically according to the rotation operation of the operating knob. There is an operating knob that protrudes in a state of being even with an operation panel and returns to the state of being even with the operation panel from the protruding state. The operating knob is moved by the power of a motor, such as a stepping motor. Various methods for moving the stepping motor are known in the related art. For example, Japanese Unexamined Patent Application Publication No. 2015-89153 discloses a method of stopping the diaphragm of a camera at a desired position by changing the output interval of the driving pulses for moving a stepping motor.

However, a load that prevents rotation may be applied to the rotary shaft of the motor of the electromechanical device. For example, if a large load due to the operator's hand, a baggage, or the like is applied to the operating knob of the shifting device, a large load is applied to the rotary shaft of the motor. In a case where the driving voltage of the motor is low and the load is large, the load applied to the rotary shaft is large. Accordingly, it may not be possible to move an object. In a case where the driving voltage of the motor is high and the load is small, an object may vibrate. That is, in the related art, there is a disadvantage in that it is not possible to stably rotate a motor corresponding to a wide range of load applied to the motor.

US 2015/303840 A1 discloses a scheme of position corrected pulse width modulation for brushless direct current motors. A method of operating a brushless direct current motor is provided that generates a rotor position dependent pulse width modulation waveform. The waveform can improve motor efficiency and reduce torque variation.

JP H07 123792 A provides a rotation controller for stepping motor. Drive pulse period calculating means of a CPU obtains a drive pulse period responsive to a target rotating speed of a stepping motor. Current supply amount control means divides the pulse period into a two-phase exciting drive period, a one-phase exciting drive period and one-phase exciting holding period, and controls current supply amount in response to the respective periods. The control means continuously supplies a current for the entire period during the two-phase period and the one-phase period. The control means PWM-controls a minimum limit of necessary current to hold the rotor at a stepping angle position for the one-phase exciting holding period.

US 5,117,171A a method and apparatus for controlling a stepping motor. A stepping motor having independently energizable windings for respectively producing magnetic fields at right angles to each other and directed at the axis of a rotor having a fixed polarity perpendicular to its axis, is operated so that the advance from one step to the next is produced by energizing one winding with a voltage producing a current continuously in one direction, while the voltage applied to the other winding is a rectangularly alternating voltage of a constant period and a gradually changing keying ratio. The roles of the two windings are interchanged between successive steps. A microcomputer for control of the motor has a pulse timing table and a program memory. Two control code memories are provided, one for specifying the direction of current in each of the windings during pulses of a sequence and one for specifying the direction of current in each of the windings during pauses between pulses of a sequence, as well as during an energized interval preceding the beginning of a pulsed step. The microcomputer times a switch which alternately connects a driving stage to the pulse and pause control memories.

The invention provides an electromechanical device capable of stably rotating a motor corresponding to a wide range of load applied to the motor, a control method of an electromechanical device, and a computer program product with a control program of an electromechanical device according to the appended claims.

According to an aspect of the invention, there is provided an electromechanical device defined in claim 1.

According to the invention, it is possible to stably rotate the motor corresponding to a wide range of load applied to the motor by changing the driving signal according to a change in the length of the stay period reflecting the load of the rotary shaft.

According to the invention, it is possible to stably rotate the motor corresponding to a wide range of load applied to the motor by changing the potential difference in the driving signal according to a change in the length of the stay period reflecting the load of the rotary shaft.

According to the invention, in a case where the load of the rotary shaft is large and the stay period is long, it is possible to reliably rotate the motor by gradually increasing the potential difference from the potential difference of the predetermined initial period. In addition, if the stay period expires during the predetermined initial period, the potential difference remains relatively small. Accordingly, it is possible to prevent vibration due to a large potential difference applied at the time of light load. In addition, it is possible to shorten the time required for position control by preventing vibration.

According to the invention, since the potential difference returns to a predetermined initial value whenever the angle range is switched, it is possible to repeat the same operation in each angle range. As a result, it is possible to stably rotate the motor with a simple configuration.

Preferably, in the electromechanical device of the invention, the motor control unit fixes the potential difference to a predetermined maximum value after the potential difference reaches the predetermined maximum value.

According to this configuration, since the potential difference is not larger than the predetermined maximum value, flowing of overcurrent to the motor is prevented. Therefore, it is possible to stably rotate the motor.

Preferably, in the electromechanical device of the invention, the rotation sensor includes a magnetic sensor.

According to this configuration, it is possible to accurately detect the angular position of the rotary shaft by using the magnetic sensor.

Preferably, in the electromechanical device of the invention, an operating knob configured to switch a transmission of a vehicle is provided, and the operating knob is moved by driving force of the rotary shaft.

According to this configuration, since it is possible to stably rotate the motor corresponding to a wide range of load applied to the motor from the operating knob for switching the transmission of a vehicle, it is possible to stably move the operating knob.

Preferably, in the electromechanical device of the invention, the motor includes a plurality of coils for rotating the rotary shaft based on a plurality of the driving signals, and the motor control unit changes the driving signal in the stay period during step control to determine an application period of a low voltage and an application period of a high voltage of each of a plurality of the driving signals based on the angle range of the rotary shaft detected by the rotation sensor and a change in the angle range.

According to this configuration, since it is possible to stably rotate the motor corresponding to a wide range of load applied to the motor during the step control, it is possible to accurately move the rotary shaft to a target position.

According to another aspect of the invention, there is provided a control method of an electromechanical device according to claim 6.

According to still another aspect of the invention, there is provided a computer program product comprising software code sections causing a computer to execute the control method of an electromechanical device described above.

### BRIEF DESCRIPTION OF THE DRAWINGS

Fig. 1 is a perspective view of an electromechanical device of an embodiment of the invention;
Fig. 2 is a perspective view of the electromechanical device shown in Fig. 1 in which an operating knob is located at a housing position;
Fig. 3 is a sectional view of the electromechanical device taken along the line 3-3 in Fig. 1;
Fig. 4 is a sectional view of the electromechanical device taken along the line 4-4 in Fig. 2;
Fig. 5 is a conceptual diagram showing a arrangement of some components of a motor;
Fig. 6 is a table showing a combination of detection signals of rotation sensors for each detection phase;
Fig. 7 is a block diagram of a control system of the electromechanical device shown in Fig. 1;
Fig. 8 is a graph showing a relationship between the voltage of an exemplary driving signal and time;
Fig. 9 is a graph showing an exemplary relationship between the high voltage of a driving signal and time; and
Fig. 10 is a flowchart illustrating an embodiment of a control method of the electromechanical device shown in Fig. 1.

The invention is defined by the claims. The embodiments and/or examples of the following description, which are not covered by the claims, are provided for illustrative purpose only and are only intended to assist the reader in understanding the invention. Such embodiments and/or examples, which are not covered by the claims, do not form part of the invention.

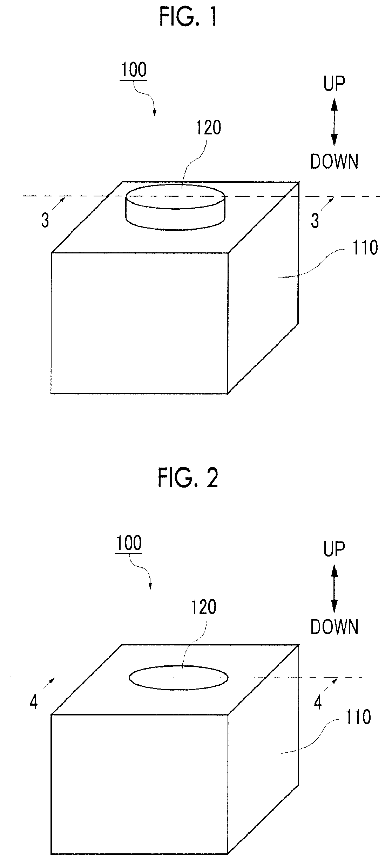

Hereinafter, an electromechanical device according to an embodiment of the invention will be described. Figs. 1 and 2 are perspective views showing different states of an electromechanical device 100 according to the present embodiment. The electromechanical device 100 is a shifting device mounted in a vehicle (not shown). A vertical direction in the present embodiment is defined for convenience of description, and does not limit the actual use direction.

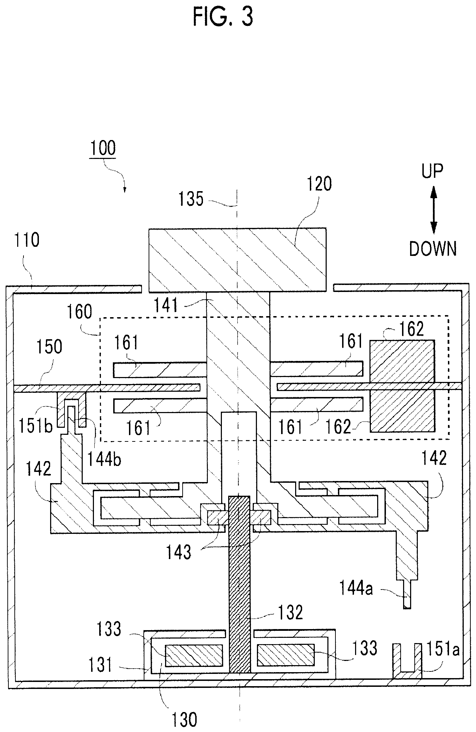

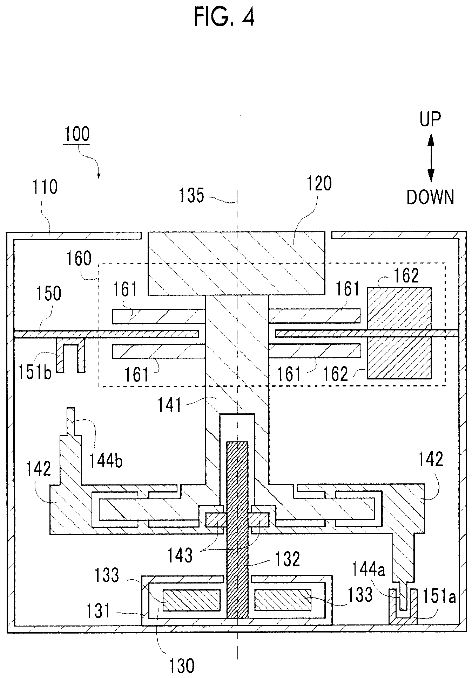

Fig. 3 is a schematic sectional view when viewed from the direction of the arrow after cutting the electromechanical device 100 shown in Fig. 1, in which an operating knob 120 is in a protruding position, along a plane including the line 3-3 and the vertical direction of the operating knob 120 that is the movement direction of the operating knob 120. Fig. 4 is a schematic sectional view when viewed from the direction of the arrow after cutting the electromechanical device 100 shown in Fig. 2, in which the operating knob 120 is in a housing position, along a plane including the line 4-4 and the vertical direction of the operating knob 120.

As shown in Fig. 1, the electromechanical device 100 includes a housing 110 and the operating knob 120. Components of the electromechanical device 100 excluding the operating knob 120 are housed in the housing 110. The housing 110 may not be provided.

The operating knob 120 sends an instruction electronically so as to switch the transmission of a vehicle in response to the rotation operation of a person. The operating knob 120 moves between the protruding position shown in Fig. 1, at which the operating knob 120 protrudes upward from the housing 110, and the housing position shown in Fig. 2, at which the operating knob 120 is housed in the housing 110. For example, when an ignition switch (not shown) of a vehicle is turned on, the operating knob 120 moves to the protruding position shown in Fig. 1 from the housing position shown in Fig. 2. By turning off the ignition switch, the operating knob 120 moves to the housing position shown in Fig. 2 from the protruding position shown in Fig. 1.

As shown in Fig. 3, the electromechanical device 100 includes a motor 130. The motor 130 of the present embodiment is a step motor. The motor 130 includes a cover 131, a rotary shaft 132 provided so as to protrude upward to the outside of the cover 131 from the inside of the cover 131, and a stator 133 disposed around the rotary shaft 132 within the cover 131. On the cylindrical outer circumferential surface of the rotary shaft 132, a groove is provided so as to function as a worm gear.

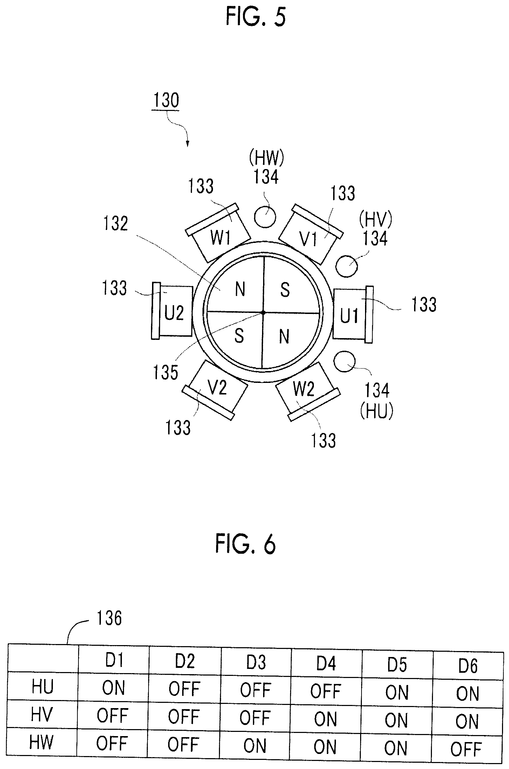

Fig. 5 is a conceptual diagram showing the arrangement when some components of the motor 130 are viewed from above. The rotary shaft 132 rotates around a virtual centerline 135 along the vertical direction. The lower end of the rotary shaft 132 functions as a rotor formed of a magnet in which four poles of NSNS are arranged evenly in the rotation direction. Coils U1, V1, W1, U2, V2, and W2 that form the stators 133 of six slots are disposed in this order around the centerline 135 at intervals of 60° counterclockwise. The arrangement of the poles of the rotary shaft 132 is the same in units of 180° around the centerline 135.

The motor 130 is controlled in the same manner as in a control method of a general three-phase brushless motor. The coils U1, V1, W1, U2, V2, and W2 rotate the rotary shaft 132 based on a plurality of driving signals. A rotation direction and a rotation speed are determined by the temporal change of the driving signal. Driving signals that are symmetrical every 180° around the centerline 135 are applied to the stator 133.

The motor 130 further includes three rotation sensors 134 disposed at intervals of 60° around the centerline 135. The rotation sensor 134 is a magnetic sensor, more specifically, is a hall element using a Hall effect. The rotation sensor 134 detects the angular position of the rotary shaft 132. The rotation sensor 134 (HU) is disposed between the coils W2 and U1. The rotation sensor 134 (HV) is disposed between the coils U1 and V1. The rotation sensor 134 (HW) is disposed between the coils V1 and W1.

Based on the pattern of the detection signals output from the three rotation sensors 134, the rotation direction and the angular position of the rotary shaft 132 can be seen. The angular position corresponds to an angle by which the rotary shaft 132 has rotated. The rotation sensor 134 detects in which of a plurality of angle ranges of a predetermined width the angular position of the rotary shaft 132 is present.

A table 136 in Fig. 6 shows the combination of detection signals of the rotation sensors 134 (HU to HW) that are identified by detection phases D1 TO D6. The detection phases D1 TO D6 correspond to angle ranges obtained by dividing 180° equally into six parts. The remaining 180° is also the repetition of the same pattern as the detection phases D1 TO D6.

In the detection phase D1, HU is ON, HV is OFF, and HW is OFF. In the detection phase D2, HU is OFF, HV is OFF, and HW is OFF. In the detection phase D3, HU is OFF, HV is OFF, and HW is ON. In the detection phase D4, HU is OFF, HV is ON, and HW is ON. In the detection phase D5, HU is ON, HV is ON, and HW is ON. In the detection phase D6, HU is ON, HV is ON, and HW is OFF.

According to which of the detection phases D1 TO D6 shown in Fig. 6 the combination of the detection signals of the rotation sensors 134 (HU to HW) shown in Fig. 5 corresponds, it is possible to know the angle range where the rotary shaft 132 is present. When the rotary shaft 132 is rotating in a first rotation direction, the detection phase changes in a direction from D1 to D6. The detection phase returns to D1 after D6. When the rotary shaft 132 is rotating in a second rotation direction opposite to the first rotation direction, the detection phase changes in a direction from D6 to D1. The detection phase returns to D6 after D1.

As shown in Fig. 3, the electromechanical device 100 further includes an elevating shaft 141, an elevating table 142, and a driven gear piece 143. The elevating shaft 141 is integrally connected to the operating knob 120, and rotates integrally with the operating knob 120 around the centerline 135. The elevating table 142 rotatably holds the elevating shaft 141. The elevating table 142 can move in the vertical direction, but is restricted by an element (not shown) so that the elevating table 142 cannot rotate around the centerline 135. The driven gear piece 143 is fixed to the elevating table 142, and is disposed around the rotary shaft 132. The driven gear piece 143 has a gear groove meshing with the worm gear of the rotary shaft 132 on the surface facing the rotary shaft 132.

When the rotary shaft 132 rotates, the driven gear piece 143 moves up and down without rotation. The driven gear piece 143, the elevating table 142, the elevating shaft 141, and the operating knob 120 move up and down integrally with the rotation of the rotary shaft 132. That is, the operating knob 120 for switching the transmission of a vehicle is moved by the driving force of the rotary shaft 132. Although the driven gear piece 143 and the elevating table 142 do not rotate around the centerline 135, the operating knob 120 and the elevating shaft 141 are rotatable in both directions around the centerline 135. The operating knob 120 and the elevating shaft 141 can be rotated independently of the rotation of the rotary shaft 132. The worm gear of the rotary shaft 132 and the driven gear piece 143 function as a moving mechanism for moving the operating knob 120 along a predetermined path with the rotation of the rotary shaft 132. The predetermined path is a straight line parallel to the centerline 135.

The elevating table 142 has two pieces of a lower light-shielding piece 144a and an upper light-shielding piece 144b (hereinafter, may be referred to as a light-shielding piece 144 without distinction). The lower light-shielding piece 144a is provided so as to protrude downward from a part of the elevating table 142, and the upper light-shielding piece 144b is provided so as to protrude upward from a part of the elevating table 142.

The electromechanical device 100 further includes a circuit board 150. The circuit board 150 is disposed so as to partition the internal space of the housing 110 up and down. The circuit board 150 is disposed between the operating knob 120 and the elevating table 142, and is disposed so that the elevating shaft 141 penetrates the circuit board 150 without being in contact with the circuit board 150.

The electromechanical device 100 further includes a lower position sensor 151a and an upper position sensor 151b (hereinafter, may be referred to as a position sensor 151 without distinction). The position sensor 151 is a photosensor for detecting the position of the operating knob 120 indirectly rather than detecting the position of the light-shielding piece 144. The lower position sensor 151a is disposed on the bottom surface of the housing 110, and detects the position of the lower light-shielding piece 144a. The upper position sensor 151b is disposed on the lower surface of the circuit board 150, and detects the position of the upper light-shielding piece 144b.

The position sensor 151 defines an internal space having an opening at the top or the bottom. The position sensor 151 detects whether or not an object is present in the internal space using light. The position sensor 151 is turned on in a case where the light-shielding piece 144 is present in the internal space, and is turned off in a case where the light-shielding piece 144 is not present in the internal space. In the vertical direction, the movement amount of the operating knob 120 is the same as the movement amount of the light-shielding piece 144. The position sensor 151 detects the position of the operating knob 120 indirectly through the light-shielding piece 144. The operating knob 120 moves up and down between the housing position where the light-shielding piece 144 turns on the lower position sensor 151a and the protruding position where the light-shielding piece 144 turns on the upper position sensor 151b.

The electromechanical device 100 further includes an operation detection unit 160 mounted on the circuit board 150. The operation detection unit 160 includes two rotary disks 161 disposed on both sides of the circuit board 150 and an operation amount sensor 162. The elevating shaft 141 is disposed so as to penetrate the rotary disk 161. A groove extending in the vertical direction is provided on the cylindrical side surface of the elevating shaft 141, and an engagement piece of the rotary disk 161 is engaged with the groove of the elevating shaft 141. The rotary disk 161 is constrained to the circuit board 150 so as to be movable around the centerline 135 and not to move up and down by a component (not shown).

When the elevating shaft 141 moves up and down, the rotary disk 161 does not move up and down since the engagement piece of the rotary disk 161 slides in the groove of the elevating shaft 141. When the elevating shaft 141 rotates around the centerline 135, the rotary disk 161 rotates together with the elevating shaft 141 since the engagement piece of the rotary disk 161 is pushed into the groove of the elevating shaft 141. The rotation amount of the rotary disk 161 is detected by the operation amount sensor 162 that is a magnetic sensor. That is, the rotation operation of the operating knob 120 is detected by the operation amount sensor 162 through the elevating shaft 141 and the rotary disk 161. Means for detecting the rotation operation of the operating knob 120 is not limited thereto. Control system

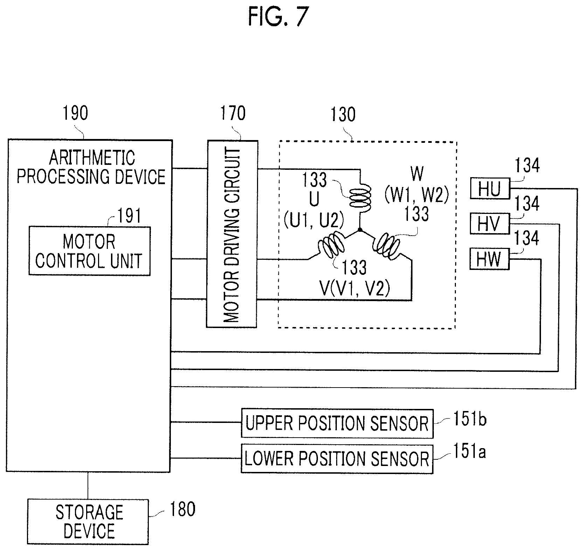

Fig. 7 is a block diagram of a control system relevant to the control of the vertical movement of the electromechanical device 100. The electromechanical device 100 includes a motor driving circuit 170, a storage device 180, and an arithmetic processing device 190 shown in Fig. 7, which are mounted on the circuit board 150 shown in Fig. 3.

The motor driving circuit 170 rotates the rotary shaft 132 (Fig. 3) in a desired direction and at desired speed and stops the rotary shaft 132 (Fig. 3) by controlling the motor 130 based on an instruction from the arithmetic processing device 190.

The storage device 180 stores a control program. The control program is read by the arithmetic processing device 190, and causes the arithmetic processing device 190 to have a function for implementing a part of a control method of the electromechanical device 100 and other functions. When the arithmetic processing device 190 performs various functions, the storage device 180 is controlled by the arithmetic processing device 190, and appropriately stores required information. The storage device 180 is a non-transient tangible storage medium. The storage device 180 includes a read only memory (ROM) and a random access memory (RAM). The storage device 180 is a volatile or nonvolatile storage medium. A storage device 180 may be removable, or may not be removable.

The arithmetic processing device 190 functions as a motor control unit 191 by reading and executing the control program stored in the storage device 180. The arithmetic processing device 190 of the present embodiment is a general-purpose computer, but may be an application specific integrated circuit (ASIC) or may be other circuits capable of implementing each function described in the present embodiment.

The arithmetic processing device 190 is connected to the motor driving circuit 170, the lower position sensor 151a, the upper position sensor 151b, the rotation sensor 134 (HU), the rotation sensor 134 (HV), and the rotation sensor 134 (HW).

The arithmetic processing device 190 functions as the motor control unit 191 by reading and executing the control program stored in the storage device 180. The motor control unit 191 controls the rotary shaft 132 (Fig. 3) mainly using three kinds of methods of rotation control, stop control, and step control.

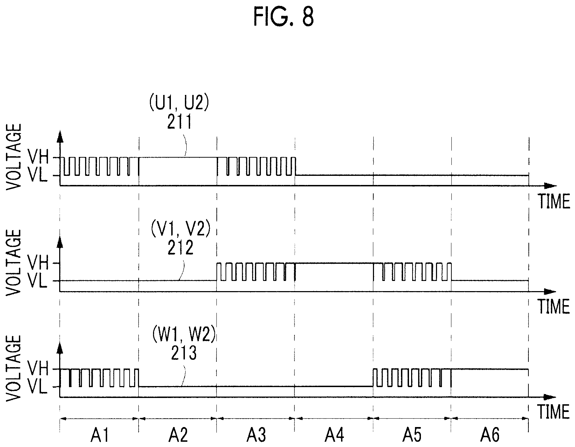

First, rotation control will be described with reference to Figs. 5 and 8. Fig. 8 is a graph showing the relationship between the voltage of an exemplary driving signal, which is applied to the stator 133, and time. A first driving signal 211 is applied to the coils U1 and U2. A second driving signal 212 is applied to the coils V1 and V2. A third driving signal 213 is applied to the coils W1 and W2. All of the voltages of the first to third driving signals 211 to 213 is a square wave that takes either a low voltage VL or a high voltage VH at each point in time, and is a pulse width modulation signal obtained by changing the application period of the low voltage VL and the application period of the high voltage VH with time.

In the first driving signal 211, in a period A1, the period of the high voltage VH becomes gradually long. In a period A2, the first driving signal 211 takes only the high voltage VH. In a period A3, the period of the high voltage VH becomes gradually short. In periods A4 to A6, the first driving signal 211 takes only the low voltage VL. The second driving signal 212 has a shape obtained by cyclically shifting the first driving signal 211 by two periods to the right. The third driving signal 213 has a shape obtained by cyclically shifting the second driving signal 212 by two periods to the right.

By repeatedly applying the first to third driving signals 211 to 213 to the stator 133 in order of the periods A1 to A6, the rotary shaft 132 rotates in the first rotation direction. By repeatedly applying the first to third driving signals 211 to 213 to the stator 133 in order of the periods A6 to A1, the rotary shaft 132 rotates in the second rotation direction opposite to the first rotation direction. The rotary shaft 132 rotates quickly if the first to third driving signals 211 to 213 of the periods A1 to A6 are transmitted fast, and rotates slowly if the first to third driving signals 211 to 213 of the periods A1 to A6 are transmitted slowly.

Next, stop control will be described with reference to Figs. 5 and 8. In stop control, the motor control unit 191 determines a driving signal based on the current angle range of the current rotary shaft 132 obtained from the rotation sensor 134 and a change in the angle range. In stop control, finer movement than in the rotation control is performed by fixing a driving signal by a certain period. The driving signal may be different from that in the case of rotation control. The motor control unit 191 sets any of the twelve angular positions, which are arranged at angles obtained by equally dividing one rotation of the rotary shaft 132 into twelve parts, as a stop target. A driving signal is selected so that torque toward the set stop target is applied to the rotary shaft 132. A driving signal is determined so that torque toward the stop target is applied to the rotary shaft 132 present in the vicinity of the stop target.

Next, step control will be described with reference to Figs. 5 and 8. In step control, the motor control unit 191 determines the application period of the low voltage VL and the application period of the high voltage VH of each driving signal based on the current angle range of the rotary shaft 132 obtained from the rotation sensor 134 and a change in the angle range. In the step control, the rotary shaft 132 moves in units of angle range. For example, a driving signal of any combination of the periods A1 to A6 in Fig. 8 is selected according to the current detection phases D1 TO D6 shown in Fig. 6. The combination of driving signals may be other than those shown in Fig. 8. When the current detection phase is D1 (Fig. 6) and it is necessary to move the rotary shaft 132 to D2, a driving signal of the combination to apply torque toward D2 to the rotary shaft 132 is selected in the periods A1 to A6 shown in Fig. 8.

When moving the operating knob 120 located at the protruding position in Fig. 3 to the housing position in Fig. 4, the motor control unit 191 moves the operating knob 120 to a target position by rotation control first. Whether or not the operating knob 120 has reached the target position is detected by counting a change in the detection phase detected by the rotation sensor 134. Then, in a case where the current number of counts reaches the number of counts of the target position, stop control is performed. Then, in a case where the current number of counts is not yet the number of counts of the target position, fine adjustment is performed by stop control.

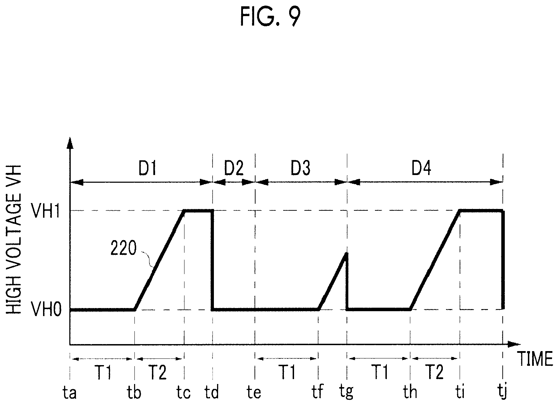

Fig. 9 is a graph 220 showing the exemplary relationship between the high voltage VH of a driving signal and time. The step control will be described in detail with reference to Figs. 5 and 9. The output of the rotation sensor 134 has a detection phase D1 in a period ta to td, a detection phase D2 in a period td to te, a detection phase D3 in a period te to tg, and a detection phase D4 in a period tg to tj.

The motor control unit 191 controls the rotation of the rotary shaft 132 by transmitting a driving signal to the motor 130 based on the angle range of the rotary shaft 132 detected by the rotation sensor 134. Differences in the angle range correspond to differences among the detection phases D1 TO D6 (Fig. 6). The motor control unit 191 changes the driving signal in a stay period according to the length of the stay period until the rotary shaft 132 exits from one angle range after the rotary shaft 132 enters the one angle range. The motor control unit 191 changes the driving signal in the stay period by changing the potential difference between the low voltage VL (Fig. 8) and the high voltage VH. The motor 130 increases the torque applied to the rotary shaft 132 as the potential difference between the low voltage VL and the high voltage VH of the driving signal increases. For example, the motor control unit 191 fixes the low voltage VL, and changes the potential difference between the low voltage VL and the high voltage VH. In the example shown in Fig. 9, the high voltage VH is changed in different shapes in all of the stay periods ta to td, td to te, te to tg, and tg to tj.

The motor control unit 191 sets the potential difference to a predetermined initial value in response to the switching of the angle range of the rotary shaft 132 detected by the rotation sensor 134. In the example shown in Fig. 9, the motor control unit 191 sets the potential difference to a predetermined initial value by returning the high voltage VH to VH0 at time ta, td, tg, and tj.

The motor control unit 191 maintains the potential difference between driving voltages at a predetermined initial value until a predetermined initial period T1 is exceeded after the angle range of the rotary shaft 132 is switched. In the example shown in Fig. 9, since the high voltage VH is fixed in the periods ta to tb, td to te, te to tf, and tg to th, the potential difference between driving voltages is maintained at a predetermined initial value in the periods ta to tb, td to te, te to tf, and tg to th.

In a case where the stay period exceeds the predetermined initial period T1, the motor control unit 191 gradually increases the potential difference in the driving signal in at least a part of the stay period after the passage of the initial period T1. In the example shown in Fig. 9, since the high voltage VH gradually increases in the periods tb to tc, tf to tg, and th to ti, the potential difference between driving voltages gradually increases in the periods tb to tc, tf to tg, and th to ti. The rate of change in the potential difference is fixed. In other examples, the rate of change may not be fixed.

The motor control unit 191 fixes the potential difference to a predetermined maximum value after the potential difference reaches the predetermined maximum value. In the example shown in Fig. 9, since the high voltage VH is fixed to a maximum value VH1 in the periods tc to td and ti to tj, the potential difference is fixed to the predetermined maximum value in the periods tc to td and ti to tj. The motor control unit 191 may detect that the high voltage VH has reached the maximum value VH1 from the value of the high voltage VH, or may detect that the high voltage VH has reached the maximum value VH1 when a rising period, in which the high voltage VH rises gradually, exceeds T2.

When moving the operating knob 120 located at the protruding position shown in Fig. 3 to the housing position shown in Fig. 4, the load of the rotary shaft 132 is relatively small if there is no contact with the operating knob 120. When the load of the rotary shaft 132 is relatively small, it is possible to rotate the rotary shaft 132 with relatively small torque. The stay period td to te shown in Fig. 9 corresponds to a case where the load applied to the rotary shaft 132 is relatively small, and is shorter than other stay periods.

If a load is applied to the operating knob 120 due to the human hand, a baggage, or the like, a relatively large load is applied to the rotary shaft 132. When the load applied to the rotary shaft 132 is relatively large, large torque is required in order to rotate the rotary shaft 132. The stay periods ta to td, te to tg, and tg to tj shown in Fig. 9 correspond to a case where the load applied to the rotary shaft 132 is relatively large, and is longer than other stay periods. If the stay period exceeds the initial period T1, the potential difference in the driving signal increases, and torque applied to the rotary shaft 132 increases. Therefore, even if a large load is applied to the rotary shaft 132, it is possible to rotate the rotary shaft 132.

### Control method

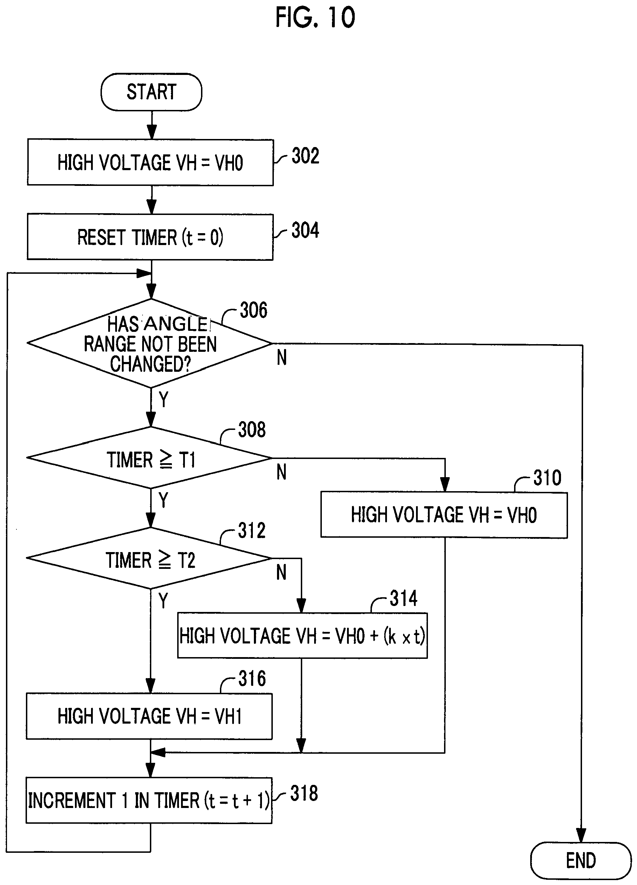

Next, a control method of the electromechanical device 100 at the time of step control will be described with reference to the flow shown in Fig. 10. The control method is executed whenever the angular position detected by the rotation sensor 134 is changed.

In step 302, the motor control unit 191 sets the high voltage VH of the driving signal to VH0. The potential difference between the high voltage VH and low voltage VL of the driving signal is a predetermined initial value. That is, whenever the angular position detected by the rotation sensor 134 is changed, the potential difference in the driving signal returns to a predetermined initial value. VH0 is larger than the low voltage VL.

In step 304, the motor control unit 191 resets the timer to t = 0. Elapsed time indicated by the timer represents the time elapsed from the change in the angular position detected by the rotation sensor 134.

In step 306, the motor control unit 191 determines whether or not the angular position detected by the rotation sensor 134 has been changed. The change in the angular position corresponds to a change in the detection phases D1 TO D6 (Fig. 6). In a case where the angular position detected by the rotation sensor 134 has been changed, the motor control unit 191 ends this control method since the angular position of the rotary shaft 132 has been changed by the relatively small torque. In a case where the angular position detected by the rotation sensor 134 has not been changed, the motor control unit 191 proceeds to step 308.

In step 308, the motor control unit 191 determines whether or not the elapsed time indicated by the timer is equal to or longer than the predetermined initial period T1. The motor control unit 191 proceeds to step 310 in a case where the elapsed time is less than the predetermined initial period T1, and proceeds to step 312 in a case where the elapsed time is equal to or longer than the predetermined initial period T1.

In step 310, the motor control unit 191 maintains the high voltage VH of the driving signal at VH0, and proceeds to step 318. That is, the potential difference is maintained at a predetermined initial value until the elapsed time becomes equal to or longer than the predetermined initial period T1.

In step 312, the motor control unit 191 determines whether or not the elapsed time indicated by the timer is equal to or longer than a predetermined rising period T2. The motor control unit 191 proceeds to step 314 in a case where the elapsed time is less than the predetermined rising period T2, and proceeds to step 318 in a case where the elapsed time is equal to or longer than the predetermined rising period T2. The rising period T2 is a time until the high voltage VH of the driving signal reaches the maximum value VH1 from the start of rising.

In step 314, the motor control unit 191 increases the high voltage VH of the driving signal, and proceeds to step 318. The high voltage VH of the driving signal is expressed by VH0 + (k × t). k is a proportionality constant indicating the degree of increase of a voltage per unit time. t is elapsed time indicated by a timer. The high voltage VH rises gradually in proportion to time.

In step 316, the motor control unit 191 fixes the high voltage VH of the driving signal at the maximum value VH1, and proceeds to step 318. That is, the potential difference is fixed when the high voltage VH of the driving signal reaches VH1.

In step 318, the motor control unit 191 increments 1 in the timer (t = t + 1). In the present embodiment, step 318 is executed at approximately the same timing.

The motor control unit 191 repeats steps 306 to 318 until it is determined that the angular position detected by the rotation sensor 134 has been changed in step 306.

### Effect

According to the present embodiment, it is possible to stably rotate the motor 130 corresponding to a wide range of load applied to the motor 130 by changing the driving signal according to a change in the length of the stay period reflecting the load of the rotary shaft 132.

According to the present embodiment, it is possible to stably rotate the motor 130 corresponding to a wide range of load applied to the motor 130 by changing the potential difference in the driving signal according to a change in the length of the stay period reflecting the load of the rotary shaft 132.

According to the present embodiment, in a case where the load of the rotary shaft 132 is large and the stay period is long, it is possible to reliably rotate the motor 130 by gradually increasing the potential difference from the potential difference of the predetermined initial period. If the stay period expires during the predetermined initial period, the potential difference remains relatively small. Accordingly, it is possible to prevent vibration due to a large potential difference applied at the time of light load. In addition, it is possible to shorten the time required for position control by preventing vibration.

According to the present embodiment, since the potential difference returns to a predetermined initial value whenever the angle range is switched, it is possible to repeat the same operation in each angle range. As a result, it is possible to stably rotate the motor 130 with a simple configuration.

According to the present embodiment, since the potential difference is not larger than the predetermined maximum value, flowing of overcurrent to the motor 130 is prevented. Therefore, it is possible to stably rotate the motor 130.

According to the present embodiment, since it is possible to stably rotate the motor 130 corresponding to a wide range of load applied to the motor 130 from the operating knob 120 for switching the transmission of a vehicle, it is possible to stably move the operating knob 120.

The invention can be applied to various electromechanical devices for driving a motor including a rotary shaft. The electromechanical device is a shifting device for switching the transmission of a transporter, such as a vehicle, an aircraft, a ship, and a spacecraft, for example.

It should be understood by those skilled in the art that various modifications, combinations, sub-combinations and alterations may occur depending on design requirements and other factors insofar as they are within the scope of the appended claims.

## Claims

1. An electromechanical device (100), comprising:
a stepping motor (130) configured to include a rotary shaft (132);
a rotation sensor (134) configured to detect in which of a plurality of angle ranges an angular position of the rotary shaft (132) is present; and
a motor control unit (191) configured to control rotation of the rotary shaft (132) by transmitting a driving signal to the motor (130) based on the angle range of the rotary shaft (132) detected by the rotation sensor (134),
wherein the driving signal is a pulse width modulation, PWM, signal obtained by changing an application period of a low voltage and an application period of a high voltage,
the motor control unit (191) is configured to perform a step control by changing the driving signal in a stay period according to a length of the stay period which is a period from when the rotary shaft (132) enters one angle range until the rotary shaft (132) exits from the one angle range,
**characterized in that**
in a case where the stay period exceeds a predetermined initial period, the motor control unit (191) is configured to gradually increase a potential difference between the low voltage and the high voltage in the driving signal in at least a part of the stay period after passage of the predetermined initial period, and
the motor control unit (191) is configured to set the potential difference to a predetermined initial value in response to switching of the angle range of the rotary shaft (132) detected by the rotation sensor (134).

2. The electromechanical device (100) according to claim 1,
wherein the motor control unit (191) is configured to fix the potential difference to a predetermined maximum value after the potential difference reaches the predetermined maximum value.

3. The electromechanical device (100) according to claim 1 or 2,
wherein the rotation sensor (134) includes a magnetic sensor.

4. The electromechanical device (100) according to one of claims 1-3, further comprising:
an operating knob (120) configured to switch a transmission of a vehicle,
wherein the operating knob (120) is moved by driving force of the rotary shaft (132).

5. The electromechanical device (100) according to one of claims 1-4,
wherein the motor (130) includes a plurality of coils for rotating the rotary shaft (132) based on a plurality of the driving signals, and
the motor control unit (191) is configured to change the driving signal in the stay period during step control to determine an application period of a low voltage and an application period of a high voltage of each of a plurality of the driving signals based on the angle range of the rotary shaft (132) detected by the rotation sensor (134) and a change in the angle range.

6. A control method of an electromechanical device (100) including a motor (130) configured to include a rotary shaft (132), a rotation sensor (134) configured to detect in which of a plurality of angle ranges an angular position of the rotary shaft (132) is present, and a motor control unit (191) configured to control rotation of the rotary shaft (132) by transmitting a driving signal to the motor (130) based on the angle range of the rotary shaft (132) detected by the rotation sensor (134), the method comprising:
changing the driving signal in a stay period according to a length of the stay period which is a period from when the rotary shaft (132) enters one angle range until the rotary shaft (132) exits from the one angle range; **characterized in that** the method is
gradually increasing a potential difference between a low voltage and a high voltage in the driving signal in at least a part of the stay period after passage of the predetermined initial period, in a case where the stay period exceeds a predetermined initial period,
wherein the potential difference is set to a predetermined initial value in response to switching of the angle range of the rotary shaft (132) detected by the rotation sensor (134).

7. A computer program product comprising software code sections configured to cause an electromechanical device (100) according to claim 1 to execute the control method of an electromechanical device (100) according to claim 6.

## Patentansprüche

1. Elektromechanische Vorrichtung (100), die aufweist:
einen Schrittmotor (130), der so ausgelegt ist, dass er eine Drehwelle (132) aufweist;
einen Drehsensor (134), der dazu ausgelegt ist, zu detektieren, in welchem einer Mehrzahl von Winkelbereichen eine Winkelposition der Drehwelle (132) vorhanden ist; und
eine Motorsteuereinheit (191), die dazu ausgelegt ist, die Drehung der Drehwelle (132) durch Senden eines Ansteuersignals an den Motor (130) auf Grundlage des von dem Drehsensor (134) detektierten Winkelbereichs der Drehwelle (132) zu steuern,
wobei das Ansteuersignal ein Pulsbreitenmodulations(PWM)-Signal ist, das durch Ändern einer Anlegezeitperiode einer niedrigen Spannung und einer Anlegezeitperiode einer hohen Spannung erlangt wird,
wobei die Motorsteuereinheit (191) dazu ausgelegt ist, eine Schrittsteuerung durch Ändern des Ansteuersignals in einer Verweilperiode gemäß einer Länge der Verweilperiode durchzuführen, die eine Periode von dem Zeitpunkt, zu dem die Drehwelle (132) in einen Winkelbereich eintritt, bis zu dem Zeitpunkt, zu dem die Drehwelle (132) den einen Winkelbereich verlässt, ist,
**dadurch gekennzeichnet, dass**
wenn die Verweilperiode eine vorbestimmte Anfangsperiode überschreitet, die Motorsteuereinheit (191) dazu ausgelegt ist, eine Potenzialdifferenz zwischen der niedrigen Spannung und der hohen Spannung in dem Ansteuersignal in zumindest einem Teil der Verweilperiode nach Ablauf der vorbestimmten Anfangsperiode allmählich zu erhöhen, und
die Motorsteuereinheit (191) dazu ausgelegt ist, die Potenzialdifferenz als Reaktion auf das Wechseln des von dem Drehsensor (134) detektierten Winkelbereichs der Drehwelle (132) auf einen vorbestimmten Anfangswert einzustellen.

2. Elektromechanische Vorrichtung (100) nach Anspruch 1,
wobei die Motorsteuereinheit (191) dazu ausgelegt ist, die Potenzialdifferenz bei einem vorbestimmten Maximalwert zu fixieren, nachdem die Potenzialdifferenz den vorbestimmten Maximalwert erreicht.

3. Elektromechanische Vorrichtung (100) nach Anspruch 1 oder 2,
wobei der Drehsensor (134) einen Magnetsensor aufweist.

4. Elektromechanische Vorrichtung (100) nach einem der Ansprüche 1-3, die ferner aufweist:
einen Betätigungsknopf (120), der zum Schalten eines Getriebes eines Fahrzeugs ausgelegt ist,
wobei der Betätigungsknopf (120) durch die Antriebskraft der Drehwelle (132) bewegt wird.

5. Elektromechanische Vorrichtung (100) nach einem der Ansprüche 1-4,
wobei der Motor (130) eine Mehrzahl von Spulen zum Drehen der Drehwelle (132) auf Grundlage einer Mehrzahl der Ansteuersignale aufweist, und
die Motorsteuereinheit (191) dazu ausgelegt ist, das Ansteuersignal in der Verweilperiode während der Schrittsteuerung zu ändern, um eine Anlegeperiode einer niedrigen Spannung und eine Anlegeperiode einer hohen Spannung jedes einer Mehrzahl der Ansteuersignale auf Grundlage des von dem Drehsensor (134) detektierten Winkelbereichs der Drehwelle (132) und einer Änderung des Winkelbereichs zu bestimmen.

6. Steuerverfahren für eine elektromechanische Vorrichtung (100), die einen Motor (130), der so ausgelegt ist, dass er eine Drehwelle (132) aufweist, einen Drehsensor (134), der dazu ausgelegt ist, zu detektieren, in welchem einer Mehrzahl von Winkelbereichen eine Winkelposition der Drehwelle (132) vorhanden ist, und eine Motorsteuereinheit (191), die dazu ausgelegt ist, die Drehung der Drehwelle (132) durch Senden eines Ansteuersignals an den Motor (130) auf Grundlage des von dem Drehsensor (134) detektierten Winkelbereichs der Drehwelle (132) zu steuern, aufweist, wobei das Verfahren aufweist:
Ändern des Ansteuersignals in einer Verweilperiode gemäß einer Länge der Verweilperiode, die eine Periode von dem Zeitpunkt, zu dem die Drehwelle (132) in einen Winkelbereich eintritt, bis zu dem Zeitpunkt, zu dem die Drehwelle (132) den einen Winkelbereich verlässt, ist;
**dadurch gekennzeichnet, dass** das Verfahren aufweist:
allmähliches Erhöhen einer Potenzialdifferenz zwischen einer niedrigen Spannung und einer hohen Spannung in dem Ansteuersignal in mindestens einem Teil der Verweilperiode nach Ablauf der vorbestimmten Anfangsperiode, wenn die Verweilperiode eine vorbestimmte Anfangsperiode überschreitet,
wobei die Potenzialdifferenz als Reaktion auf das Umschalten des von dem Drehsensor (134) detektierten Winkelbereichs der Drehwelle (132) auf einen vorbestimmten Anfangswert eingestellt wird.

7. Computerprogrammprodukt mit Softwarecodeabschnitten, die dazu ausgelegt sind, zu bewirken, dass eine elektromechanische Vorrichtung (100) nach Anspruch 1 das Steuerverfahren für eine elektromechanische Vorrichtung (100) nach Anspruch 6 ausführt.

## Revendications

1. Un dispositif électromécanique (100) qui comprend :
un moteur pas à pas (130) qui est configuré pour englober un arbre rotatif (132) ;
un capteur de rotation (134) qui est configuré pour détecter dans quelle plage angulaire parmi un certain nombre de plages angulaires se trouve une position angulaire de l'arbre rotatif (132) ; et
une unité de commande de moteur (191) qui est configurée pour commander la rotation de l'arbre rotatif (132) par l'intermédiaire de la transmission d'un signal d'entraînement au moteur (130) en se basant sur la plage angulaire de l'arbre rotatif (132) qui a été détectée par le capteur de rotation (134) ;
dans lequel le signal d'entraînement est un signal de modulation en largeur d'impulsion, PWM, que l'on obtient en modifiant un laps de temps d'application d'une basse tension et un laps de temps d'application d'une haute tension ;
l'unité de commande de moteur (191) est configurée pour mettre en oeuvre une commande de pas à pas en modifiant le signal d'entraînement au d'une période de séjour en fonction d'une longueur de la période de séjour qui représente une période qui s'étend à partir du moment où l'arbre rotatif (132) pénètre dans une certaine plage angulaire jusqu'au moment où l'arbre rotatif (32) quitte ladite une plage angulaire ;
**caractérisé en ce que**
dans un cas dans lequel la période de séjour dépasse une période initiale prédéterminée, l'unité de commande de moteur (191) est configurée pour augmenter de manière progressive une différence de potentiel entre la basse tension et la haute tension dans le signal d'entraînement sur au cours d'une partie de la période de séjour après le passage de la période initiale prédéterminée ; et
l'unité de commande de moteur (191) est configurée pour régler la différence de potentiel à une valeur initiale prédéterminée en réponse à la commutation de la plage angulaire de l'arbre rotatif (132) qui a été détectée par le capteur de rotation (134).

2. Le dispositif électromécanique (100) selon la revendication 1,
dans lequel l'unité de commande de moteur (191) est configurée pour fixer la différence de potentiel à une valeur maximale prédéterminée une fois que la différence de potentiel atteint la valeur maximale prédéterminée.

3. Le dispositif électromécanique (100) selon la revendication 1 ou 2,
dans lequel le capteur de rotation (134) englobe un capteur magnétique.

4. Le dispositif électromécanique (100) selon l'une quelconque des revendications 1 à 3, qui comprend en outre :
un bouton d'actionnement (120) qui est configuré pour la commutation d'une transmission d'un véhicule ;
dans lequel le bouton d'actionnement (120) et soumis à un déplacement par l'intermédiaire de la force d'entraînement de l'arbre rotatif (132).

5. Le dispositif électromécanique (100) selon l'une quelconque des revendications 1 à 4,
dans lequel le moteur (130) englobe un certain nombre de bobines pour la rotation de l'arbre rotatif (132) en se basant sur un certain nombre des signaux d'entraînement ; et
l'unité de commande de moteur (191) est configurée pour modifier le signal d'entraînement au cours de la période de séjour lors de la commande pas à pas afin de déterminer une période d'application d'une basse tension et une période d'application d'une haute tension de chacun desdits plusieurs signaux d'entraînement en se basant sur la plage angulaire de l'arbre rotatif (132) qui a été détectée par le capteur de rotation (134) et sur un changement intervenu dans la plage angulaire.

6. Un procédé de commande d'un dispositif électromécanique (100) qui englobe un moteur (130) configuré pour englober un arbre rotatif (132), un capteur de rotation (134) configuré pour détecter dans quelle plage horaire, parmi un certain nombre de plages horaires, se trouve une position angulaire de l'arbre rotatif (132), et une unité de commande de moteur (191) configurée pour commander la rotation de l'arbre rotatif (132) par l'intermédiaire de la transmission d'un signal d'entraînement au moteur (130) en se basant sur la plage angulaire de l'arbre rotatif (132) qui a été détectée par le capteur de rotation (134), le procédé comprenant le fait de :
modifier le signal d'entraînement dans une période de séjour en fonction d'une longueur de la période de séjour qui représente une période qui s'étend à partir du moment où l'arbre rotatif (132) pénètre dans une certaine plage horaire jusqu'au moment où l'arbre rotatif (132) quitte ladite une plage angulaire ;
**caractérisé en ce que** le procédé consiste à :
augmenter de manière progressive une différence de potentiel entre une basse tension et une haute tension dans le signal d'entraînement dans au moins une partie de la période de séjour après le passage de la période initiale prédéterminée, dans un cas dans lequel la période de séjour dépasse une période initiale prédéterminée ;
dans lequel la différence de potentiel est réglée à une valeur initiale prédéterminée en réponse à une commutation de la plage angulaire de l'arbre rotatif (132) qui a été détectée par le capteur de rotation (134).

7. Un produit de programme informatique qui comprend des segments de codes de logiciel configurés pour faire en sorte qu'un dispositif électromécanique (100) selon la revendication 1 mette en oeuvre le procédé de commande d'un dispositif électromécanique (100) conformément à la revendication 6.
